(19) Europäisches Patentamt
European Patent Office
Office européen des brevets

(11) EP 2 484 737 B1

(12) **EUROPEAN PATENT SPECIFICATION**

(45) Date of publication and mention of the grant of the patent:
**29.07.2015 Bulletin 2015/31**

(21) Application number: **10819081.0**

(22) Date of filing: **28.09.2010**

(51) Int Cl.:
***C09J 133/10*** *(2006.01)* ***G06F 3/041*** *(2006.01)*

(86) International application number:
**PCT/KR2010/006599**

(87) International publication number:
**WO 2011/037440 (31.03.2011 Gazette 2011/13)**

(54) **TOUCH PANEL**

BERÜHRUNGSTAFEL

PANNEAU TACTILE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **28.09.2009 KR 20090092065**
**27.09.2010 KR 20100093117**

(43) Date of publication of application:
**08.08.2012 Bulletin 2012/32**

(73) Proprietor: **LG Chem, Ltd.**
**Yeongdeungpo-gu**
**Seoul 150-721 (KR)**

(72) Inventors:
- **PARK, Min Soo**
**Daejeon 305-390 (KR)**
- **YANG, Se Woo**
**Daejeon 302-772 (KR)**
- **KIM, Woo Ha**
**Daejeon 305-340 (KR)**
- **HWANG, Yoon Tae**
**Daejeon 305-340 (KR)**
- **CHANG, Suk Ky**
**Daejeon 305-370 (KR)**

(74) Representative: **Cabinet Plasseraud**
**52, rue de la Victoire**
**75440 Paris Cedex 09 (FR)**

(56) References cited:
**EP-A1- 2 341 112**
**JP-A- 2004 091 499**
**JP-A- 2007 224 186**
**JP-A- 2008 266 473**
**US-A1- 2008 248 299**
**US-A1- 2009 022 967**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

[Technical Field]

The present invention relates to a touch panel, and a pressure sensitive adhesive composition and a pressure sensitive adhesive sheet, applied to the touch panel.

[Background Art]

A touch panel is also called as a touch screen and applied to various information processing terminals such as mobile communication terminals and ATM or displays such as TV or monitors. As the touch panel is increasingly used in small portable electronic devices, and the like, demand for small and lightweight touch panels is on the rise.

According to the above trend, the touch panel is increasingly configured by forming a transparent conductive thin film on a transparent plastic film with indium tin oxide (ITO) and using the resulting film.

In a process of configuring the touch panel in a shape having the plastic film as above, a pressure sensitive adhesive is used to attach said plastic film to other film or substrate, and the like. In a pressure sensitive adhesive used in configuring such touch panel, physical properties are required, which may maintain transparency under a severe condition such as high temperature or high temperature and high humidity condition and inhibit looseness, detachment and warpage. In addition, the plastic film causes so-called out-gassing phenomenon that moisture, solvent or other liquid phase additives present inside in heat resistant condition are emitted to a gaseous state, and this emitted gas causes bubbles, so that visibility is easily lowered. Therefore, it is also required in the pressure sensitive adhesive to effectively inhibit the bubble generation.

Furthermore, in the process of configuring the touch panel, most of pressure sensitive adhesive layers are directly attached to a conductive thin film such as a thin film of indium tin oxide. Accordingly, the pressure sensitive adhesive layer also requires a characteristic that the panel drive may be stably carried out even in a prolonged period use by inhibiting change of resistance in the conductive thin film.

[Disclosure]

[Technical Problem]

The present invention is intended to provide a touch panel, and a pressure sensitive adhesive composition and a pressure sensitive adhesive sheet, applied to the touch panel.

[Technical Solution]

The present invention relates to a touch panel as defmed in claim 1.

The present invention is explained in detail below.

The present touch panel of the invention has a shape having a plastic substrate film. The present touch panel of the invention is a capacitance type touch panel.

It is also described a resistance type touch panel outside the scope of the present inveniton having a plastic substrate film, a transparent plastic film, one side of which a transparent conductive thin film is formed on; and a glass or plastic film, one side of which a transparent conductive film is also formed on, are used, for example, as upper and bottom base, respectively. In the resistance type touch panel, a spacer is formed between transparent conductive thin films formed on said upper and bottom base materials, respectively. When the touch panel is pressed by a pen or a hand for said two conductive thin films to be in contact with each other, it realizes the touch, as an electric current runs.

In the capacitance type touch panel according to the present invention having a plastic substrate film, two bases, at least one side of which transparent conductive thin film is formed on, configure a capacitor by attaching said transparent conductive thin films among themselves with a pressure sensitive adhesive layer. At least one base in the above two base materials comprises a plastic substrate film and the touch is realized by change of capacitance with touching.

A unitary component comprising a conductance type touch panel according to the present invention is variously present, but the basic unit is as shown in Figure 2. It is also described the basic unit of a resistance type touch panel outside the scope of the present invention in Figure 1.

Figure 1 represents a structure (1) that a base (13), one side of which a hard coating (12) is formed on, and a substrate film (14) are attached via a pressure sensitive adhesive layer (11). In the structure of Figure 1, the base (13) and the substrate film (14) may be a plastic substrate film. Figure 2 represents a structure (2) applied to a capacitance type touch panel according to the present invention, which has a shape that base (23, 24), one side of which conductive

thin films (21, 22) each are formed on, are attached via a pressure sensitive adhesive layer (11). In the structure of Figure 2, an upper base material (23) or a bottom base material (24) may be a plastic substrate film.

In the present invention, the touch panel is a capacitance type touch panel, wherein a conductive thin film (21) is formed on at least one side of said plastic substrate film (23) and said pressure sensitive adhesive layer (11) is directly attached to said conductive thin film (21), as in Figure 2.

The capacitance type touch panel further comprises a base (24), one side of which a conductive thin film (22) is formed on, wherein it may have a shape that the conductive thin film (22) of said base (24) and the conductive thin film (21) of said plastic substrate film (23) are attached to each other by said pressure sensitive adhesive layer (11).

The plastic substrate film included in the present touch panel is not particularly limited to any kind. As long as the plastic substrate film herein has transparency, it can be used without limitation. Specifically, a polyester film, an acrylic resin film, a polycarbonate film, a polyamide film, a polyvinyl chloride film, a polystyrene film or a polyolefin film, and the like may be used, and preferably, a polyester film such as polyethylene terephthalate or a polycarbonate film, and the like may be used.

A thickness of the plastic substrate film as above herein is not particularly limited, and may be suitably set depending on positions to which the substrate film is applied. For example, said substrate film may have a thickness of about 3 $\mu$m to 300 $\mu$m, preferably about 5 $\mu$m to 250 $\mu$m and more preferably, 10 $\mu$m to 200 $\mu$m.

In addition, the plastic substrate film or the conductive thin film formed on base materials may be formed by, for example, a vacuum vapor deposition method, a sputtering method, an ion plating method, a spray pyrolysis method, a chemical plating method, an electroplating method or a thin film formation method in combination with at least two methods thereof, and preferably a vacuum vapor deposition method or a sputtering method.

As a raw material consisting of the conductive thin film, a metal such as gold, silver, platinum, palladium, copper, aluminum, nickel, chrome, titanium, iron, cobalt, tin and an alloy of at least two metals thereof, indium oxide, tin oxide, titanium oxide, cadmium oxide or metal oxides composed of at least two mixtures thereof, or other metal oxides composed of copper iodide, and the like may be used. Said conductive thin film may be a crystalline layer or an amorphous layer. Preferably, the conductive thin film herein may be formed by using indium tin oxide (ITO), without being limited thereto. In addition, the thickness of the conductive thin film as above may be controlled in a range of about 10 nm to 300 nm, and preferably, about 10 nm to 200 nm, considering possibility for forming a continuous coat, conductivity and transparency, and the like.

The conductive thin film herein may be also formed on the plastic substrate film or the base material via an anchor layer or a dielectric layer. The anchor layer or the dielectric layer can improve adhesion between the conductive thin film and the substrate film or the base material and scratch resistance or flex resistance. The anchor layer or the dielectric layer may be formed by using, for example, inorganic materials such as $SiO_2$, $MgF_2$ or $Al_2O_3$, and the like; organic materials such as an acrylic resin, a urethane resin, a melamine resin, an alkyd resin or a siloxane polymer or a mixture of at least two thereof, wherein as a forming method, for example, a vacuum vapor deposition method, a sputtering method, an ion plating method or a pottery method may be adapted. The anchor layer or the dielectric layer may be formed in a thickness of usually about 100 nm or less, particularly 15 nm to 100 nm, and more particularly 20 nm to 60 nm.

An appropriate adhesion treatment such as a corona discharge treatment, an ultraviolet irradiation treatment, a plasma treatment or a sputter etching treatment may be also carried out on the substrate film or the base material side on which the conductive thin film is formed.

Furthermore, a hard coating layer (12) in the structure as shown in Figure 1 may be formed by a process of applying a hard resin such as acrylic urethane resin or siloxane resin and hardening it and usually have a thickness of 0.1 $\mu$m to 30 $\mu$m.

The present touch panel comprises a pressure sensitive adhesive layer comprising an acrylic resin having the polydispersity index (PDI) of 3.5 or less, wherein said pressure sensitive adhesive layer is attached to said plastic substrate film or a conductive thin film forming on said plastic substrate film. The polydispersity index herein is a value ($M_w/M_n$) that a weight average molecular weight ($M_w$) of acrylic resin is divided by a number average molecular weight ($M_n$) thereof. The weight average molecular weight and the number average molecular weight can be measured by Gel Permeation Chromatography (GPC). The acrylic resin herein may have the polydispersity index of, preferably, 3.0 or less. By using the acrylic resin having a polydispersity index of 3.5 or less, free volume in the pressure sensitive adhesive layer is suitably regulated, whereby a phenomenon of lowering visibility or other optical properties by penetrating oxygen, moisture or other foreign materials into an interface between the pressure sensitive adhesive layer and an adherent, or generating bubbles from an adherent interface by the out-gassing phenomenon in the plastic substrate film, may be effectively prevented. In particular, since the pressure sensitive adhesive layer is directly attached to the conductive thin film, said pressure sensitive adhesive layer effectively inhibits change of resistance in the conductive thin film even though it is exposed to a severe condition. Therefore, the touch panel may be stably driven for a long time. As the polydispersity index of said resin herein have lower value, so does the free volume in the pressure sensitive adhesive decrease to improve the effects as mentioned above. Therefore, the lower limit is not particularly limited, but it may be,

for example, at least about 0.5, preferably, at least 1.0, more preferably at least 1.5, and most preferably at least 2.0.

Said acrylic resin herein may have a weight average molecular weight of 300,000 to 1,500,000, preferably 400,000 to 1,200,000, and more preferably 500,000 to 800,000. It the weight average molecular weight of the resin is too low, endurance may be decreased. If it is too high, workability such as coating ability may be decreased or warpage resistance may be lowered. Therefore, it is preferred to control it in the aforementioned range.

In one aspect of the present invention, the acrylic resin may comprise a (meth)acrylic acid ester monomer and a copolymerizable monomer that can provide the acrylic resin with a crosslinkable functional group in a polymerized form.

The (meth)acrylic acid ester monomer above is not particularly limited to any kind, but, for example, alkyl (meth)acrylate may be used and considering physical properties such as cohesive attraction, glass transition temperature and stickiness, alkyl (meth)acrylate having an alkyl group with 1 to 14 carbon atoms may be used. Examples of such alkyl (meth)acrylate may include methyl (meth)acrylate, ethyl (meth)acrylate, n-propyl (meth)acrylate, isopropyl (meth)acrylate, butyl (meth)acrylate, t-butyl (meth)acrylate, pentyl (meth)acrylate, 2-ethylhexyl (meth)acrylate, n-octyl (meth)acrylate, isooctyl (meth)acrylate, isononyl (meth)acrylate, lauryl (meth)acrylate and tetradecyl (meth)acrylate, and the like, wherein the resin may comprise one or two or more thereof in a polymerized form.

The copolymerizable monomer providing with a crosslinkable functional group may provide the resin with a crosslinkable functional group that can react with a multi-functional crosslinker. Examples of such crosslinkable functional group may include a hydroxyl group, a carboxyl group, a nitrogenous group, an epoxy group or an isocyanate group, and the like, and it may be, preferably, a hydroxyl group, a carboxyl group or a nitrogenous group. In a field of preparing acrylic resins, various copolymerizable monomers that can provide the resin with a crosslinkable functional group as above are known, wherein the monomer as above may be used without limitation. For example, as a copolymerizable monomer having a hydroxyl group, 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 2-hydroxyethyleneglycol (meth)acrylate or 2-hydroxypropyleneglycol (meth)acrylate, and the like may be used; as a copolymerizable monomer having a carboxyl group, (meth)acrylic acid, 2-(meth)acryloyloxy acetic acid, 3-(meth)acryloyloxy propionic acid, 4-(meth)acryloyloxy butyric acid, acrylic acid dimer, itaconic acid, maleic acid or maleic anhydride, and the like may be used; and as a copolymerizable monomer having a nitrogenous group, (meth)acrylamide, N-vinyl pyrrolydone or N-vinyl caprolactam, and the like may be used, without limiting thereto.

The acrylic resin herein may comprise 90 to 99.9 parts by weight of a (meth)acrylic acid ester monomer and 0.1 to 10 parts by weight of a copolymerizable monomer providing with a crosslinkable functional group in a polymerized unit. The unit "part by weight" herein means a ratio by weight. By controlling ratios by weight of monomers in the above range, physical properties of the pressure sensitive adhesive layer such as initial adhesion strength, endurance and peel force may be effectively maintained.

The present acrylic resin may further comprise, if appropriate, a comonomer represented by the following Formula 1 in a polymerized form. Said comonomer may be included for purpose of controlling glass transition temperature or giving other functions.

[Formula 1]

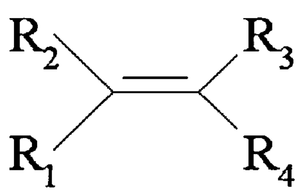

wherein, $R_1$ to $R_3$ each represents independently hydrogen or alkyl with 1 to 4 carbon atoms, $R_4$ represents cyano; phenyl unsubstituted or substituted by alkyl with 1 to 4 carbon atoms; acetyloxy; or -C(=O)$R_5$, where $R_5$ represents amino or glycidyloxy unsubstituted or substituted by alkyl with 1 to 4 carbon atoms or alkoxyalkyl with 2 to 8 carbon atoms.

Specific examples of the comonomer of Formula 1 may include a nitrogenous monomer such as (meth)acrylonitrile, N-methyl (meth)acrylamide or N-butoxy methyl (meth)acrylamide; a styrene monomer such as styrene or methyl styrene; glycidyl (meth)acrylate; or vinyl ester of carboxylic acid such as vinyl acetate, and the like, but are not limited thereto.

When the comonomer of Formula 1 is included in the resin, it is preferred that the ratio is 20 parts by weight or less, but not limited thereto.

The acrylic resin as above herein may be prepared by a usual polymerization manner in this field, for example, solution polymerization, photo polymerization, bulk polymerization, suspension polymerization or emulsion polymerization manners, and preferably a solution polymerization manner. In addition, said polymerization may be also carried out

in the presence of a suitable chain transfer agent (CTA), for example, 2-mercaptoethanol, lauryl mercaptan, glycidyl mercaptan, mercaptoacetic acid, 2-ethylhexylthioglycolate, 2,3-dimercapto-1-propanol and α-methyl-styrene dimer, and the like.

Said acrylic resin included in the present touch panel may be present in a state crosslinked by a multi-functional crosslinker. That is, said pressure sensitive adhesive layer may further comprise a multi-functional crosslinker which crosslinks said acrylic resin.

The usable crosslinker herein is not particularly limited to any kind, and, for example, an isocyanate compound, an epoxy compound, an aziridine compound or a metal chelate compound, and the like may be used, which may be suitably selected from one or two or more crosslinkers, considering the kind of the crosslinkable functional group included in the resin. The isocyanate compound may be tolylene diisocyanate, xylene diisocyanate, diphenylmethane diisocyanate, hexamethylene diisocyanate, isophorone diisocyanate, tetramethylxylene diisocyanate or naphthalene diisocyanate, and the like. Also, the isocyanate compound may be an addition reaction product of at least one foregoing isocyanate compound and a polyol. Here, as the polyol, trimethylolpropane may be used. As the epoxy compound, one or two or more from ethyleneglycol diglycidylether, triglycidylether, trimethylolpropane triglycidylether, N,N,N',N'-tetraglycidyl ethylenediamine or glycerin diglycidylether, and the like may be used, and as the aziridine compound, one or two or more from N,N'-toluene-2,4-bis(1-aziridinecarboxamide), N,N'-diphenylmethane-4,4'-bis(1-aziridinecarboxamide), triethylenemelamine, bisisophthaloyl-1-(2-methylaziridine) or tri-1-aziridinylphosphineoxide, and the like may be used. In addition, as the metal chelate compound, a compound present in a state that a polyvalent metal is coordinated with acetyl acetone or ethyl acetoacetate, and the like may be used, wherein the polyvalent metal includes aluminum, iron, zinc, tin, titanium, antimony, magnesium or vanadium, and the like.

The multi-functional crosslinker in the present pressure sensitive adhesive layer may be included in an amount of 0.01 to 5 parts by weight relative to 100 parts by weight of an acrylic resin, wherein it can effectively regulate endurance and adhesion properties of the pressure sensitive adhesive layer in this range.

The present pressure sensitive adhesive layer may further comprise one or two or more of additives such as a silane coupling agent; a tackifier; an epoxy resin; a ultraviolet light stabilizer; an antioxidant; a toning agent; a reinforcing agent; a filler; a defoamer; a surfactant or a plasticizer, in addition to the aforementioned components.

The pressure sensitive adhesive layer as above herein may be formed by subjecting a pressure sensitive adhesive composition combined from components such as the aforementioned acrylic resin and a multi-functional crosslinker to suitable dryness, ageing, crosslinking and/or hardening processes.

The present invention relates to a pressure sensitive adhesive composition for a touch panel comprising an acrylic resin having a polydispersity index of 3.5 or less, which is satisfied with a condition of the following general formula 1.

[General Formula 1]

$$\triangle R = [(R - R_i)/R_i] \times 100 \leq 15$$

wherein, ΔR represents a resistance change rate, $R_i$ represents an initial resistance of an ITO electrode measured after a pressure sensitive adhesive layer derived from said pressure sensitive adhesive composition is attached to the ITO electrode, R is a resistance of said ITO electrode measured after the ITO electrode, to which said pressure sensitive adhesive layer is attached, is maintained at 60°C and 90% relative humidity for 240 hours.

The term "a pressure sensitive adhesive layer derived from a pressure sensitive adhesive composition" means a pressure sensitive adhesive layer that is prepared as pressure sensitive adhesive by subjecting the pressure sensitive adhesive composition to a drying process, aging process, a crosslinking process and/or a curing process, and that is applied to a touch panel.

The pressure sensitive adhesive composition for a touch panel according to the present invention may be, for example, for being applied to a touch panel having a structure as mentioned above, and specifically, for being applied to said pressure sensitive adhesive layer in the touch panel comprising a plastic substrate film and a pressure sensitive adhesive layer attached to said substrate film.

Any component to constitute the pressure sensitive adhesive composition for a touch panel according to the present invention is not particularly limited, and may comprise, for example, an acrylic resin having the polydispersity index of 3.5 or less, preferably 3.0 or less, if appropriate, together with a multi-functional crosslinker and/or other additives.

The present pressure sensitive adhesive composition comprises an acrylic resin having a polydispersity index of 3.5 or less. Therefore, it can effectively meet various physical properties required for the touch panel. Also, even if it is applied to a touch panel having a shape that a pressure sensitive adhesive layer is directly attached to a conductive thin film, it can effectively inhibit change of resistance in said conductive thin film.

Specifically, the present pressure sensitive adhesive composition may have a resistance change rate (ΔR) of general formula 1 of 15% or less, preferably 10% or less. Said resistance change rate herein is measured by a method

described in the following examples. In addition, as said resistance change rate has a low value, so is the stable drive of the touch panel secured, without limiting the lower limit.

Furthermore, the present invention relates to a pressure sensitive adhesive sheet, for a touch panel, having a pressure sensitive adhesive layer comprising a pressure sensitive adhesive composition according to the present invention. The pressure sensitive adhesive layer in the present pressure sensitive adhesive sheet may comprise said pressure sensitive adhesive composition in a state of drying, ageing, crosslinking and/or hardening.

Figure 3 represents a pressure sensitive adhesive sheet (3) according to one aspect of the present invention, wherein said pressure sensitive adhesive sheet (3) may further comprise said pressure sensitive adhesive layer (31) and release films (32, 33) formed on both sides thereof.

When the pressure sensitive adhesive sheet comprises a release film, peel force to two sheets of release film included in the pressure sensitive adhesive layer may be differently set to each other. For example, in the structure represented in Figure 3, peel force of the pressure sensitive adhesive layer (31) to one release film (33) may be set higher than one of the pressure sensitive adhesive layer (31) to other release film (32). The pressure sensitive adhesive sheet having such structure may be formed by selecting an appropriate kind of release film or regulating cure degree of the pressure sensitive adhesive layer (31).

The specific release film as above herein is not particularly limited to any kind, and various release films disclosed in this field may be used without limitation, the thickness of which may be regulated to, for example, about 5 to 150 $\mu$m.

The method of forming the pressure sensitive adhesive layer as above and preparing the pressure sensitive adhesive sheet herein is not particularly limited. For example, the pressure sensitive adhesive may be prepared by coating the present pressure sensitive adhesive composition or a coating liquid, the viscosity of which is regulated by diluting the composition in a suitable solvent, on a release film and curing it to form a pressure sensitive adhesive layer, and laminating other release film thereto. In addition, although said coating is not always carried out on the release film, it may be also carried out on other substrates. Also, the curing process of the coated coating liquid may be carried out by drying the coating layer under a suitable condition and, optionally, a process may be also carried out, which crosslinks the acrylic resin included in the pressure sensitive adhesive composition with a multi-functional crosslinker after or simultaneously with said dry process by a manner such as heating. However, although the crosslinking process is not always carried out in a procedure of forming the pressure sensitive adhesive layer, it may be also carried out in any procedure applied to the touch panel.

For example, if the pressure sensitive adhesive sheet is applied to the touch panel as mentioned above, said pressure sensitive adhesive layer may be applied to a plastic substrate film or a conductive thin film formed on the film to crosslink the acrylic resin via an appropriate crosslinking treatment.

[Advantageous Effects]

The present touch panel has a shape that comprises a plastic substrate film and a pressure sensitive adhesive layer attached to said substrate film. Here, a phenomenon of penetrating oxygen, moisture or other foreign materials into an interface between said substrate film and said pressure sensitive adhesive layer is prevented, and decrease of optical properties by bubble generation due to the out-gassing phenomenon in the plastic substrate film is prevented. In addition, even if the pressure sensitive adhesive layer is directly attached to the conductive thin film, and it is exposed to a severe condition such as high temperature or high temperature and high humidity condition as such a state, change of resistance in the conductive thin film is effectively inhibited. Therefore, the present touch panel may be stably driven for a long time.

[Description of Drawings]

Figures 1 and 2 are drawings that represent structure of touch panels according to one aspect of the present invention.
Figure 3 is a drawing that represents a pressure sensitive adhesive sheet according to one aspect of the present invention.
Figure 4 is a drawing that explains a method of measuring resistance change rate herein.

[Mode for Invention]

The present invention is explained in more detail via examples according to the present invention and comparative examples not according to the present invention below, the scope of which is not restricted to the following examples.

Each physical property in the present examples was evaluated by the following methods.

**1. Endurance Test**

A hard coating side of a polyethylene terephthalate film that has the thickness of 100 μm, and on both sides of which hard coatings are formed is attached to a polycarbonate sheet that has the thickness of 1 mm by using a pressure sensitive adhesive layer, and tailored in a size of 50 mm×100 mm (width×length). Subsequently, the tailored attachment is subjected to autoclave at 60°C and 5 atmospheres for 30 minutes to prepare a sample, for which the heat resistance endurance and the heat and moisture resistance endurance are evaluated. The heat resistance endurance is measured by leaving the sample at 80°C for 240 hours, and then evaluating the generation of bubbles, looseness, peel-off and/or warpage. Also, the heat and moisture resistance endurance is measured by leaving the sample at 60°C and 90% relative humidity for 240 hours, and then evaluating the generation of bubbles, looseness, peel-off and warpage. Specific measuring method or basis of each physical property above, which is index of endurance, is as follows.

**<Evaluation of bubble generation>**

○: In case where no bubble is generated in the interface of adhesion or a small amount of bubbles having a diameter of 100 μm or less are dispersed therein when observing with an optical microscope
×: In case where a bubble having a diameter of 100 μm or more is generated in the interface of adhesion or a large amount of bubbles having a diameter of 100 μm or less are observed in a group state when observing with an optical microscope

**<Evaluation of looseness and peel-off >**

○: In case where no looseness and peel-off is occurred in the interface of adhesion
×: In case where looseness or peel-off is occurred in the interface of adhesion

**<Evaluation of warpage>**

When the sample that had been left under the heat resistant condition or the heat and moisture resistant condition was placed on a floor, height of its center spaced from the floor by warping was measured.

**2. Test of resistance change rate**

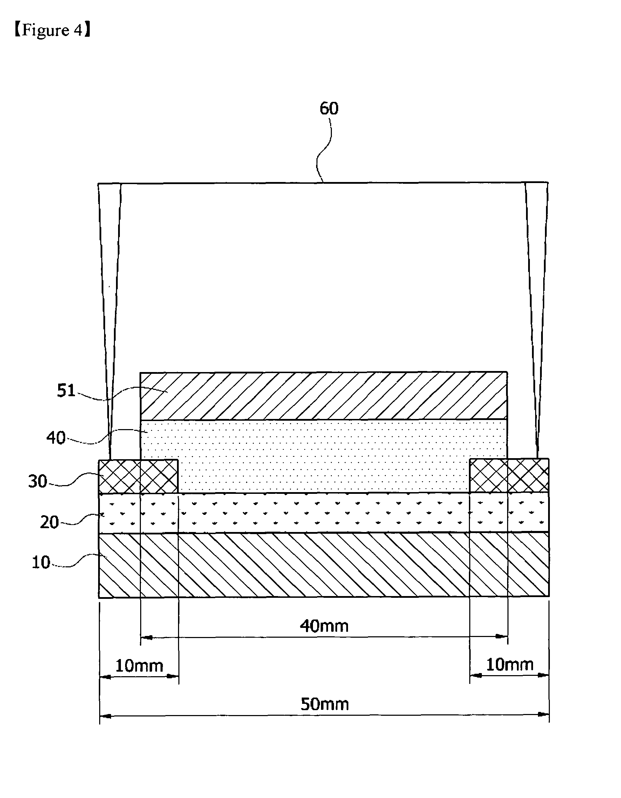

The resistance change rate is measured by a method as represented in Figure 4. First, a polethyleneterephthalate film (10) (hereinafter, referred to "conductive PET") as generally distributed in this field, wherein an ITO thin film (20) is formed on one side, is tailored in a size of 30 mm x 50 mm (width x length). Subsequently, after silver paste (30) is applied to both ends of the film (10) with a width of 10 mm as in Figure 4, the film is baked at 150°C for 30 minutes. Then, a pressure sensitive adhesive sheet as prepared in examples, and the like, wherein release films (51) are attached to both sides, is tailored in a size of 30 mm x 40 mm (width x length), and following removing one side of the release films, the obtained pressure sensitive adhesive layer (40) is attached to the baked film. Said attaching is carried out with adjusting the centers of the pressure sensitive adhesive layer and the conductive PET (10, 20). Then, using a conventional ohmmeter (60), the initial resistance ($R_i$) of the ITO thin film (20) is measured. After measuring the initial resistance, the specimen of Figure 4 is left at 60°C and 90% relative humidity for 240 hours, and the resistance (R) of the ITO thin film (20) is again measured by the ohmmeter (60). Each value is substituted in the following formula 1 to measure the resistance change rate (ΔR).

[Mathematical Formula 1]

$$\Delta R = [(R-R_i)/R_i]\times 100$$

**Preparation Example 1: Preparation of acrylic resin (A)**

97 Parts by weight of n-butyl acrylate (n-BA) and 3 parts by weight of acrylic acid (AA) were introduced into a 1L reactor in which nitrogen gas was refluxed inside and to which a cooler is installed in order to easily regulate temperature. Subsequently, 120 parts by weight of ethyl acetate (EAc) was introduced thereto as a solvent and 0.03 parts by weight of 2-mercapto ethanol as a chain transfer agent was introduced thereto. Then, to remove oxygen, nitrogen gas was purged for 60 minutes, and in a state for a temperature to be maintained at 60°C, 0.04 parts by weight of azobisisobutyronitrile (AIBN), which was an initiator for reaction, was introduced thereto, followed by reacting the mixture for 8 hours. After the reaction, the reactant was suitably diluted with ethyl acetate (EAc) to prepare an acrylic resin (A) having a solid content of 30% by weight, a weight average molecular weight of 800,000 and the polydispersity index ($M_w/M_n$) of 2.7. Here, the weight average molecular weight and the polydispersity index of the resin were measured through GPC analysis generally used in the polymer field.

**Preparation Example 2: Preparation of acrylic resin (B)**

An acrylic resin (B) was prepared by a method in accordance with Preparation Example 1, except that 93 parts by weight of n-butyl acrylate (n-BA) and 7 parts by weight of acrylic acid as monomers were introduced in the reactor. The acrylic resin (B) had a solid content of 30% by weight, a weight average molecular weight of 850,000 and the polydispersity index of 2.8.

**Preparation Example 3: Preparation of acrylic resin (C)**

An acrylic resin (C) was prepared by a method in accordance with Preparation Example 1, except that 98.5 parts by weight of n-butyl acrylate (n-BA) and 1.5 parts by weight of 2-hydroxyethyl methacrylate (2-HEMA) as monomers were introduced in the reactor. The acrylic resin (C) had a solid content of 30% by weight, a weight average molecular weight of 700,000 and the polydispersity index of 2.3.

**Preparation Example 4: Preparation of acrylic resin (D)**

An acrylic resin (D) was prepared by a method in accordance with Preparation Example 1, except that 68.5 parts by weight of n-butyl acrylate (n-BA), 30 parts by weight of methyl acrylate (MA) and 1.5 parts by weight of 2-hydroxyethyl methacrylate (2-HEMA) as monomers were introduced in the reactor. The acrylic resin (D) had a solid content of 30% by weight, a weight average molecular weight of 600,000 and the polydispersity index of 2.7.

**Preparation Example 5: Preparation of acrylic resin (E)**

An acrylic resin (E) was prepared by a method in accordance with Preparation Example 1, except that 68.5 parts by weight of n-butyl acrylate (n-BA), 30 parts by weight of methyl acrylate (MA) and 1.5 parts by weight of 2-hydroxyethyl methacrylate (2-HEMA) as monomers were introduced and 0.01 parts by weight of 2-mercaptoethanol as a chain transfer agent was introduced in the reactor. The acrylic resin (E) had a solid content of 30% by weight, a weight average molecular weight of 1,100,000 and the polydispersity index of 3.7.

**Preparation Example 6: Preparation of acrylic resin (F)**

The polymerization was carried out by the same method as Preparation Example 1, except that in 3 hours after the initiator was introduced, the reaction temperature was raised to 68°C and the reaction was carried out. The acrylic resin (F) having a solid content of 35% by weight, a weight average molecular weight of 770,000 and the polydisperstity index of 7.5 was prepared.

**Preparation Example 7: Preparation of acrylic resin (G)**

An acrylic resin (G) was prepared by a method in accordance with Preparation Example 1, except that 98.5 parts by weight of n-butyl acrylate (n-BA) and 1.5 parts by weight of 2-hydroxyethyl methacrylate (2-HEMA) as monomers were introduced in the reactor and the reaction temperature was controlled to 68°C. The acrylic resin (G) had a solid content of 33% by weight, a weight average molecular weight of 800,000 and the polydispersity index of 4.5.

**Example 1**

A pressure sensitive adhesive composition was prepared by homogeneously mixing the resin (A) of Preparation Example 1 and an epoxy cross-linker (Tetrad C; tetrafunctional epoxy cross-linker from Mitsubishi) in an amount of 0.1 parts by weight of the cross-linker relative to 100 parts by weight of solid content of the resin (A). Subsequently, said pressure sensitive adhesive composition was coated on the release treated side of a polyethyleneterephthalate film (50

μm thick) which was subjected to a release treatment on one side and treated at 120°C for 3 minutes to form a transparent pressure sensitive adhesive layer having a thickness of 50 μm. Then, the release treated side of the polyethyleneterephthalate film (50 μm thick) which was subjected to a release treatment was laminated to other side of said pressure sensitive adhesive layer to prepare a pressure sensitive adhesive sheet having a structure represented in Figure 3.

**Example 2**

The pressure sensitive adhesive sheet was prepared by the same method as Example 1, except for using the resin (B) of Preparation Example 2.

**Example 3**

The pressure sensitive adhesive sheet was prepared by the same method as Example 1, except that the acrylic resin (C) of Preparation Example 3 was used and 0.3 parts by weight of an isocyanate cross-linker (Coronate-L) as a cross-linker was mixed relative to 100 parts by weight of solid content in the resin (C).

**Example 4**

The pressure sensitive adhesive sheet was prepared by the same method as Example 1, except that the acrylic resin (D) of Preparation Example 4 was used and 0.3 parts by weight of an isocyanate cross-linker (Coronate-L) as a cross-linker was mixed relative to 100 parts by weight of solid content in the resin.

**Comparative Example 5**

The pressure sensitive adhesive sheet was prepared by the same method as Example 1, except for using the resin (E) of Preparation Example 5.

**Comparative Example 1**

The pressure sensitive adhesive sheet was prepared by the same method as Example 1, except for using the resin (F) of Preparation Example 6.

**Comparative Example 2**

The pressure sensitive adhesive sheet was prepared by the same method as Example 1, except that the acrylic resin (G) of Preparation Example 7 was used and 0.3 parts by weight of an isocyanate cross-linker (Coronate-L) as a cross-linker was mixed relative to 100 parts by weight of solid content in the resin.

Results of endurance test and resistance change rate test measured for each example and comparative example above are represented in the following Table 1.

[Table 1]

| | | Example | | | | Comparative Example | | |
|---|---|---|---|---|---|---|---|---|
| | | 1 | 2 | 3 | 4 | 5 | 1 | 2 |
| Acrylic Resin | Kind | A | B | C | D | E | F | G |
| | $M_w$(10,000) | 80 | 85 | 70 | 60 | 110 | 77 | 80 |
| | PDI | 2.7 | 2.8 | 2.3 | 2.7 | 3.7 | 7.5 | 4.5 |
| Bubble Occurring Resistance | | ○ | ○ | ○ | ○ | ○ | ○ | ○ |
| Looseness/Peel-off Evaluation | | ○ | ○ | ○ | ○ | ○ | ○ | ○ |
| Warpage Evaluation (mm) | | 0.6 | 0.7 | 0.6 | 0.6 | 1.2 | 0.8 | 0.7 |
| Resistance Change Rate (%) | | 7 | 8 | 3.8 | 4 | 8.5 | 23 | 18 |
| $M_w$: Weight Average Molecular Weight<br>PDI: Polydispersity Index | | | | | | | | |

As can be seen from the results of Table 1, when the touch panel comprises a pressure sensitive adhesive layer having the polydispersity index of 3.5 or less in accordance with examples of the present invention, all effects of inhibiting bubble generation, looseness, peel-off and warpage, which are required in the touch panel, are excellent, and especially the change in resistance of electrodes is effectively inhibited.

[Description of References]

1, 2: Touch panel structure
11: Pressure sensitive adhesive layer
13, 14, 23, 24: Base materials
12, 21, 22: Conductive thin film
3: Pressure sensitive adhesive sheet
31: Pressure sensitive adhesive layer 32, 33: Release film
10: PET film 20: ITO thin film
30: Silver paste
40: Pressure sensitive adhesive layer
51: Release film 60: Ohmmeter

## Claims

**1.** A touch panel comprising:

a plastic substrate film;
a conductive thin film formed on at least one side of the plastic substrate film; and
a pressure sensitive adhesive layer that is directly attached to the conductive thin film and includes an acrylic resin of which the polydispersity index is 3.5 or less.

**2.** The touch panel according to claim 1, wherein the touch panel further comprises a base film, at least one side of which a conductive thin film is formed on, and said pressure sensitive adhesive layer is attached to the conductive thin film of said base film and the conductive thin film of said plastic substrate film.

**3.** The touch panel according to claim 1, wherein the acrylic resin has the polydispersity index of 3.0 or less.

**4.** The touch panel according to claim 1, wherein the acrylic resin has a weight average molecular weight of 300,000 to 1,500,000.

**5.** The touch panel according to claim 1, wherein the acrylic resin comprises a (meth)acrylic acid ester monomer and a copolymerizable monomer that provides the acrylic resin with a cross-linkable functional group in a polymerized form.

**6.** The touch panel according to claim 5, wherein the cross-linkable functional group is a hydroxy group, a carboxyl group, a functional group containing nitrogen, an epoxy group or an isocyanate group.

**7.** The touch panel according to claim 1, wherein the pressure sensitive adhesive layer further comprises a multi-functional cross-linker that cross-links the acrylic resin.

**8.** The touch panel according to claim 7, wherein the multi-functional cross-linker is an isocyanate compound, an epoxy compound, an aziridine compound or a metal chelate compound.

**9.** The touch panel according to claim 7, wherein the pressure sensitive adhesive layer comprises 0.01 to 5 parts by weight of the multi-functional cross-linker, relative to 100 parts by weight of the acrylic resin.

**10.** A pressure sensitive adhesive composition for a touch panel that comprises an acrylic resin having the polydispersity index of 3.5 or less, and that is satisfied with a condition of the following general formula 1:

[General Formula 1]

$$\triangle R = [(R - R_i)/R_i] \times 100 \leq 15$$

wherein, $\Delta R$ represents a resistance change rate, $R_i$ represents an initial resistance of an ITO electrode measured after a pressure sensitive adhesive layer derived from said pressure sensitive adhesive composition is attached to the ITO electrode, R is a resistance of said ITO electrode measured after the ITO electrode, to which said pressure sensitive adhesive layer is attached, is maintained at 60°C and 90% relative humidity for 240 hours.

**11.** The pressure sensitive adhesive composition for a touch panel according to claim 10, wherein $\Delta R$ is 10 or less.

**12.** The pressure sensitive adhesive composition for a touch panel according to claim 10, wherein the touch panel comprises a plastic substrate film and a pressure sensitive adhesive layer attached to said substrate film, and wherein the composition is applied to the pressure sensitive adhesive layer of the touch panel.

**13.** A pressure sensitive adhesive sheet for a touch panel, which has a pressure sensitive adhesive layer comprising a pressure sensitive adhesive composition according to claim 10.

**Patentansprüche**

**1.** Ein Touchpanel, umfassend:

eine Kunststoffträgerfolie,
einen dünnen leitenden Film, der auf mindestens einer Seite der Kunststoffträgerfolie gebildet ist, und
eine Haftklebstoffschicht, die direkt an dem dünnen leitenden Film befestigt ist und ein Acrylharz, dessen Polydispersitätsindex 3,5 oder weniger beträgt, enthält.

**2.** Das Touchpanel gemäß Anspruch 1, wobei das Touchpanel ferner eine Grundfolie umfasst, wobei auf mindestens einer Seite derselben ein dünner leitender Film gebildet ist und die Haftklebstoffschicht an dem dünnen leitenden Film der Grundfolie und an dem dünnen leitenden Film der Kunststoffträgerfolie befestigt ist.

**3.** Das Touchpanel gemäß Anspruch 1, wobei das Acrylharz einen Polydispersitätsindex von 3,0 oder weniger aufweist.

**4.** Das Touchpanel gemäß Anspruch 1, wobei das Acrylharz ein Gewichtsmittel des Molekulargewichts von 300.000 bis 1.500.000 aufweist.

**5.** Das Touchpanel gemäß Anspruch 1, wobei das Acrylharz ein (Meth)Acrylsäureester-Monomer und ein copolymerisierbares Monomer, das das Acrylharz mit einer vernetzbaren funktionellen Gruppe in einer polymerisierten Form ausstattet, umfasst.

**6.** Das Touchpanel gemäß Anspruch 5, wobei die vernetzbare funktionelle Gruppe eine Hydroxygruppe, eine Carboxygruppe, eine Stickstoff-enthaltende funktionelle Gruppe, eine Epoxygruppe oder eine Isocyanatgruppe ist.

**7.** Das Touchpanel gemäß Anspruch 1, wobei die Haftklebstoffschicht ferner einen multifunktionellen Vernetzer umfasst, der das Acrylharz vernetzt.

**8.** Das Touchpanel gemäß Anspruch 7, wobei der multifunktionelle Vernetzer eine Isocyanatverbindung, eine Epoxyverbindung, eine Aziridinverbindung oder eine Metallchelatverbindung ist.

**9.** Das Touchpanel gemäß Anspruch 7, wobei die Haftklebstoffschicht 0,01 bis 5 Gewichtsteile des multifunktionellen Vernetzers, bezogen auf 100 Gewichtsteile des Acrylharzes, umfasst.

**10.** Eine Haftklebstoffzusammensetzung für ein Touchpanel, die ein Acrylharz mit einem Polydispersitätsindex von 3,5 oder weniger umfasst und die eine Bedingung der folgenden allgemeinen Formel 1 erfüllt:

[Allgemeine Formel 1]

$$\Delta R = [(R - R_i)/R_i] \times 100 \leq 15$$

wobei $\Delta R$ eine Widerstandsänderungsrate ist, $R_i$ ein Anfangswiderstand einer ITO-Elektrode ist, der gemessen wird, nachdem eine Haftklebstoffschicht, die von der Haftklebstoffzusammensetzung abstammt, an der ITO-Elektrode befestigt wurde, R ein Widerstand der ITO-Elektrode ist, der gemessen wird, nachdem die ITO-Elektrode, an der die Haftklebstoffschicht befestigt ist, für 240 Stunden bei 60°C und 90% relativer Feuchte gehalten wurde.

**11.** Die Haftklebstoffzusammensetzung für ein Touchpanel gemäß Anspruch 10, wobei $\Delta R$ 10 oder weniger ist.

**12.** Die Haftklebstoffzusammensetzung für ein Touchpanel gemäß Anspruch 10, wobei das Touchpanel eine Kunststoffträgerfolie und eine an dieser Trägerfolie befestigte Haftklebstoffschicht umfasst und wobei die Zusammensetzung auf die Haftklebstoffschicht des Touchpanels aufgebracht ist.

**13.** Ein Haftklebstoffflächengebilde für ein Touchpanel, das eine Haftklebstoffschicht, die eine Haftklebstoffzusammensetzung gemäß Anspruch 10 umfasst, aufweist.

## Revendications

**1.** Ecran tactile, comprenant :

un film de substrat en plastique ;
un film mince conducteur formé sur au moins une face du film de substrat en plastique ; et
une couche d'adhésif sensible à la pression qui est directement fixée au film mince conducteur et qui comprend une résine acrylique dont l'indice de polydispersité est inférieur ou égal à 3,5.

**2.** Ecran tactile selon la revendication 1, dans lequel l'écran tactile comprend en outre un film de base, sur au moins une face duquel un film mince conducteur est formé, et ladite couche d'adhésif sensible à la pression est fixée au film mince conducteur dudit film de base et au film mince conducteur dudit film de substrat en plastique.

**3.** Ecran tactile selon la revendication 1, dans lequel la résine acrylique présente un indice de polydispersité inférieur ou égal à 3,0.

**4.** Ecran tactile selon la revendication 1, dans lequel la résine acrylique possède un poids moléculaire moyen en poids de 300 000 à 1 500 000.

**5.** Ecran tactile selon la revendication 1, dans lequel la résine acrylique comprend un monomère d'ester d'acide (méth)acrylique et un monomère copolymérisable qui procure à la résine acrylique un groupe fonctionnel réticulable sous une forme polymérisée.

**6.** Ecran tactile selon la revendication 5, dans lequel le groupe fonctionnel réticulable est un groupe hydroxy, un groupe carboxyle, un groupe fonctionnel azoté, un groupe époxy ou un groupe isocyanate.

**7.** Ecran tactile selon la revendication 1, dans lequel la couche d'adhésif sensible à la pression comprend en outre un agent de réticulation multifonctionnel qui réticule la résine acrylique.

**8.** Ecran tactile selon la revendication 7, dans lequel l'agent de réticulation multifonctionnel est un composé d'isocyanate, un composé d'époxy, un composé d'aziridine ou un composé chélateur de métal.

**9.** Ecran tactile selon la revendication 7, dans lequel la couche d'adhésif sensible à la pression comprend 0,01 à 5 parties en poids de l'agent de réticulation multifonctionnel, par rapport à 100 parties en poids de la résine acrylique.

**10.** Composition d'adhésif sensible à la pression pour écran tactile, qui comprend une résine acrylique présentant un indice de polydispersité inférieur ou égal à 3,5, et qui satisfait une condition de la formule générale 1 suivante :

[Formule générale 1]

$$\Delta R = [(R - R_i)/R_i] \times 100 \leq 15$$

dans laquelle AR représente un taux de changement de résistance, $R_i$ représente une résistance initiale d'une électrode en ITO mesurée après qu'une couche d'adhésif sensible à la pression dérivée de ladite composition d'adhésif sensible à la pression est fixée à l'électrode en ITO, R est une résistance de ladite électrode en ITO mesurée après que l'électrode en ITO, à laquelle ladite couche d'adhésif sensible à la pression est fixée, est maintenue à 60 °C et sous une humidité relative de 90 % pendant 240 heures.

**11.** Composition d'adhésif sensible à la pression pour écran tactile selon la revendication 10, dans laquelle ΔR est inférieur ou égal à 10.

**12.** Composition d'adhésif sensible à la pression pour écran tactile selon la revendication 10, dans laquelle l'écran tactile comprend un film de substrat en plastique et une couche d'adhésif sensible à la pression fixée audit film de substrat, et dans laquelle la composition est appliquée sur la couche d'adhésif sensible à la pression de l'écran tactile.

**13.** Feuille d'adhésif sensible à la pression pour écran tactile, qui comporte une couche d'adhésif sensible à la pression comprenant une composition d'adhésif sensible à la pression selon la revendication 10.

【Figure 1】

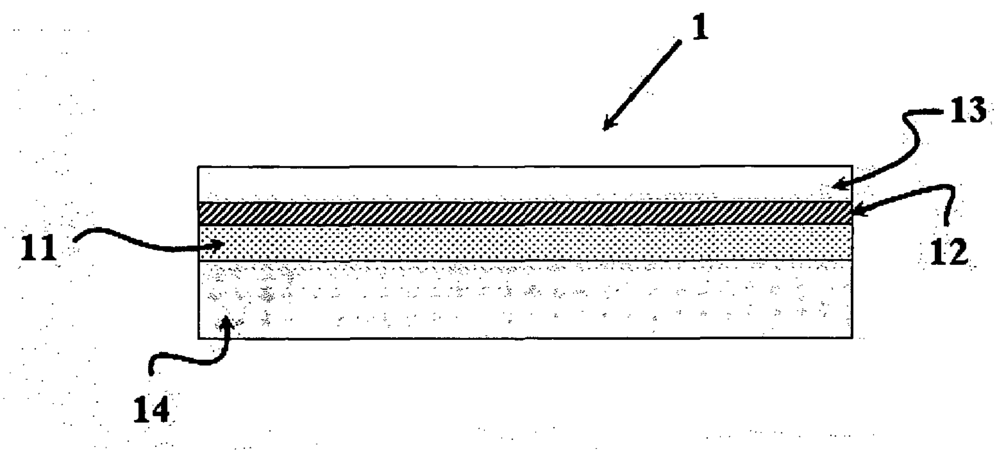


【Figure 2】

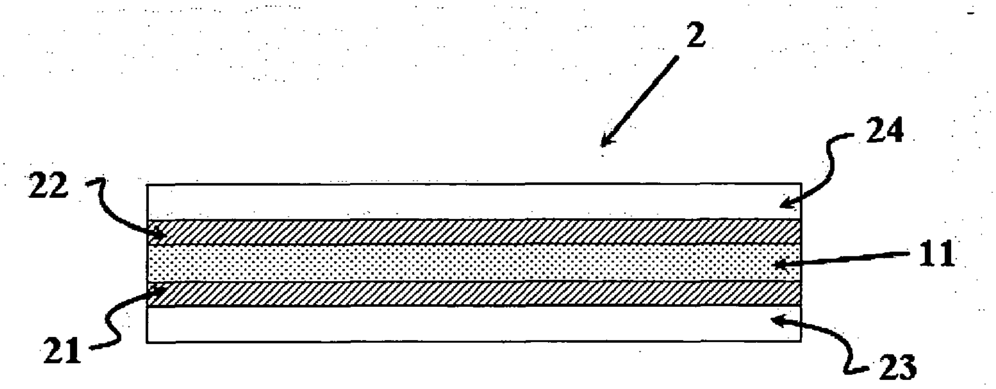

【Figure 3】

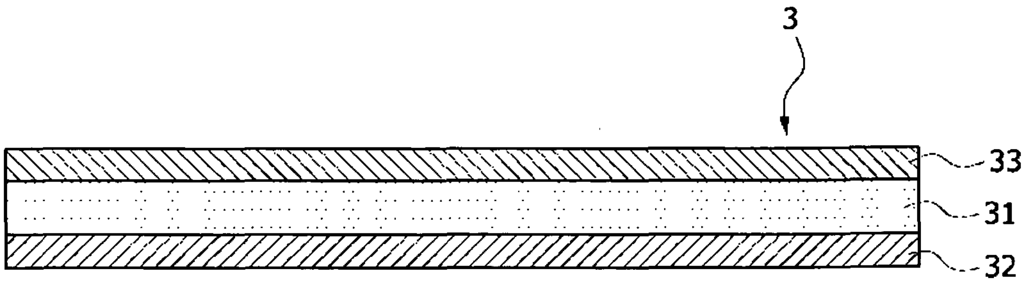

【Figure 4】